# EUROPEAN PATENT APPLICATION

(11) **EP 3 627 590 A1**
(43) Date of publication of application: **25.03.2020**
(21) Application number: 18801434.4
(22) Date of filing: 27.03.2018
(51) Int. Cl.: H01M 2/34, H01M 2/06, H01M 2/26, H01M 2/30

(54) **SECONDARY BATTERY**

(30) Priority: 19.05.2017 KR 20170062073
(71) Applicant: Samsung SDI Co., Ltd., Yongin-si, Gyeonggi-do 17084 (KR)
(72) Inventor: GUEN, Min Hyung, Yongin-si Gyeonggi-do 17084 (KR)
(74) Representative: Gulde & Partner
(86) International application number: PCT/KR2018/003599
(87) International publication number: WO 2018/212447

(57) **Abstract**

The present invention relates to a secondary battery having a shock absorbing portion for absorbing vibration or shock, thereby being capable of improving safety and reliability. As one example, disclosed is a secondary battery, comprising: an electrode assembly having a current collecting tab formed therein; a case for housing the electrode assembly; a cap plate coupled to an opening of the case; an electrode terminal formed through the cap plate; and a current collecting plate, disposed between the electrode assembly and the cap plate, for electrically connecting the current collecting tab and the electrode terminal, wherein the current collecting plate has a shock absorbing portion for absorbing vibration or shock formed thereon.

## Description

### [Technical Field]

The present invention relates to a secondary battery.

### [Background Art]

Unlike primary batteries which are not rechargeable, secondary batteries can be charged and discharged. Low-capacity secondary batteries packaged in form of a pack including a single battery cell are widely employed in portable small-sized electronic devices such as cellular phones or camcorders while large-capacity secondary batteries packaged in forms of battery packs including tens of battery cells connected to one another are widely used for driving motors of hybrid automobiles.

When a secondary battery is actually mounted in an electronic device or an automotive vehicle, it may be exposed to vibration or shock due to external environments. In addition, if the vibration or shock is repeatedly applied, the secondary battery may be internally affected, resulting in an operational failure. Accordingly, there is a need for a structure for reducing the vibration or shock applied to the secondary battery.

The above information disclosed in this Background section is only for enhancement of understanding of the background of the described technology and therefore it may contain information that does not form the prior art that is already known in this country to a person of ordinary skill in the art.

### [Technical Problems to be Solved]

The present invention provides a secondary battery having a shock absorbing portion for absorbing vibration or shock, thereby being capable of improving safety and reliability.

### [Technical Solutions]

In accordance with an aspect of the present invention, the above and other objects can be accomplished by providing a secondary battery including an electrode assembly having a current collecting tab formed therein, a case for housing the electrode assembly, a cap plate coupled to an opening of the case, an electrode terminal formed through the cap plate, and a current collecting plate, disposed between the electrode assembly and the cap plate, for electrically connecting the current collecting tab and the electrode terminal, wherein the current collecting plate has a shock absorbing portion for absorbing vibration or shock formed thereon.

The shock absorbing portion may be thinner than peripheral regions.

The shock absorbing portion may have a thickness of 20% of a thickness of the current collecting plate.

The current collecting plate may include a terminal connection part to which the electrode terminal is coupled, and a tab connection part to which the current collecting tab is coupled.

A throughhole engaged with the electrode terminal may be located at one side of the terminal connection part, and a fuse hole may be located at the other side of the terminal connection part.

The shock absorbing portion may be positioned between the throughhole and the fuse hole.

The secondary battery may further include a shock absorbing member located between the electrode terminal and the current collecting plate.

The electrode terminal may include a body part, a terminal part upwardly protruding from the body part and penetrating the cap plate, and a coupling protrusion downwardly protruding from the body part, wherein the shock absorbing member is coupled to the coupling protrusion.

The shock absorbing member may include a first shock absorbing member coupled to the coupling protrusion, and a second shock absorbing member coupled to the exterior of the first shock absorbing member.

The shock absorbing member may be formed by coating a metal film on a surface of an insulating material having elasticity.

### [Advantageous Effects]

As described above, in the secondary battery according to an embodiment of the present invention, a shock absorbing portion thinner than peripheral regions is located in a current collecting plate to absorb the vibration or shock applied to the current collecting plate, thereby improving safety. In addition, since the shock absorbing portion absorbs the vibration or shock applied to the current collecting plate, cracks can be prevented from being created at a fuse hole located in the current collecting plate, thereby improving reliability of the secondary battery.

### [Brief Description of Drawings]

FIG. 1 is a perspective view of a secondary battery according to an embodiment of the present invention.
FIG. 2 is an exploded perspective view of the secondary battery according to an embodiment of the present invention.
FIG. 3 is a bottom view illustrating a state in which a cap plate and a current collecting plate are coupled to each other in the secondary battery according to an embodiment of the present invention.
FIG. 4 is a cross-sectional view taken along the line A-A' of FIG. 1.
FIG. 5 is an enlarged cross-sectional view illustrating a coupling relationship of a current collecting plate in the secondary battery according to an embodiment of the present invention.
FIG. 6 is an enlarged cross-sectional view illustrating a coupling relationship of a current collecting plate in a secondary battery according to another embodiment of the present invention and FIG. 7 is an exploded perspective view of the current collecting plate shown in FIG. 6.
FIG. 8 is an enlarged cross-sectional view illustrating a coupling relationship of a current collecting plate in a secondary battery according to still another embodiment of the present invention and FIG. 9 is an exploded perspective view of the current collecting plate shown in FIG. 8.

### [Best Mode for Carrying Out the Invention]

Hereinafter, a preferred embodiment of the present invention will be described in detail.

Various embodiments of the present invention may be embodied in many different forms and should not be construed as being limited to the example embodiments set forth herein. Rather, these example embodiments of the disclosure are provided so that this disclosure will be thorough and complete and will convey inventive concepts of the disclosure to those skilled in the art.

In the accompanying drawings, sizes or thicknesses of various components are exaggerated for brevity and clarity. Like numbers refer to like elements throughout. As used herein, the term "and/or" includes any and all combinations of one or more of the associated listed items.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

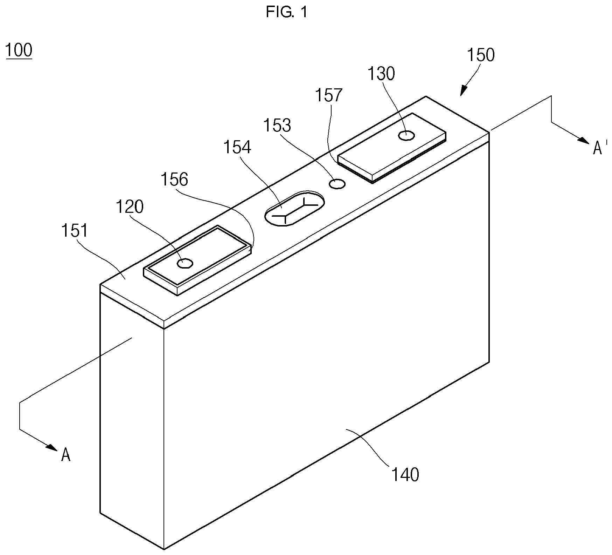

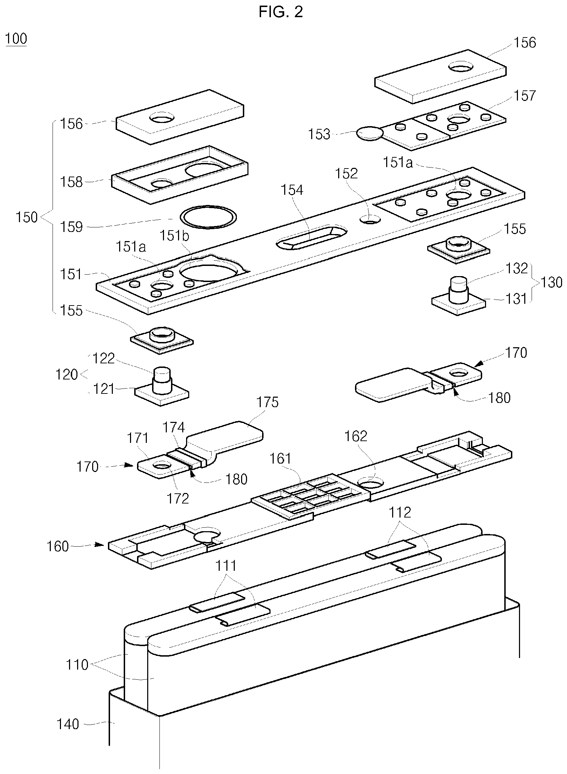

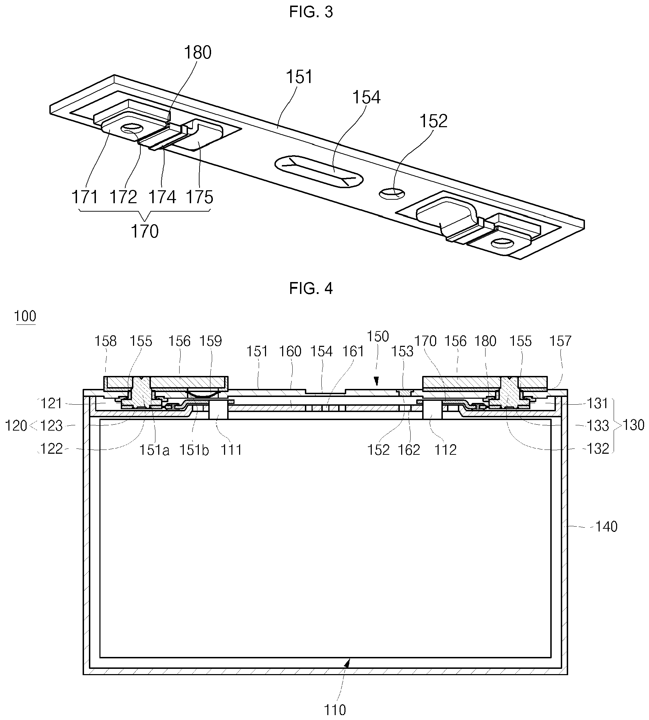

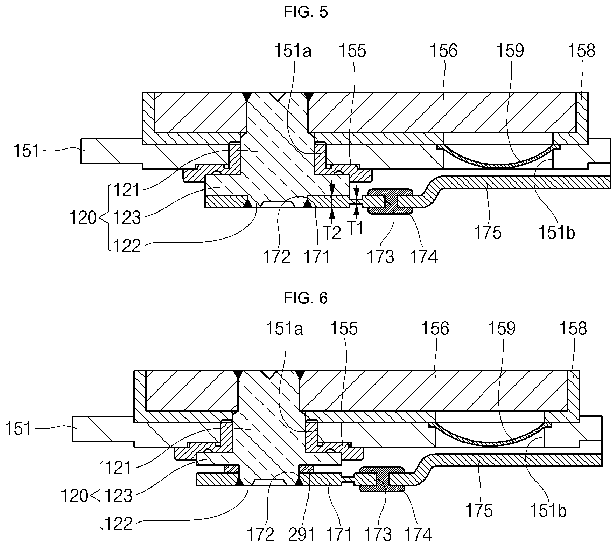

FIG. 1 is a perspective view of a secondary battery according to an embodiment of the present invention. FIG. 2 is an exploded perspective view of the secondary battery according to an embodiment of the present invention. FIG. 3 is a bottom view illustrating a state in which a cap plate and a current collecting plate are coupled to each other in the secondary battery according to an embodiment of the present invention. FIG. 4 is a cross-sectional view taken along the line A-A' of FIG. 1. FIG. 5 is an enlarged cross-sectional view illustrating a coupling relationship of a current collecting plate in the secondary battery according to an embodiment of the present invention.

Referring to FIGS. 1 to 5, the secondary battery 100 according to an embodiment of the present invention includes an electrode assembly 110, electrode terminals 120 and 130, a case 140, a cap assembly 150, an insulation plate 160, a current collecting plate 170 and a shock absorbing portion 190.

The electrode assembly 110 is formed by winding or laminating a stacked structure including a first electrode plate, a separator and a second electrode plate, which are thin plates or layers. Here, the first electrode plate may operate as a negative electrode. and the second electrode plate operate as a positive electrode. Of course, polarities of the first electrode plate and the second electrode plate may change according to the choice made by one skilled in the art, and the first electrode plate and the second electrode plate may then be suitably arranged.

The first electrode plate is formed by coating a first electrode active material, such as graphite or carbon, on a first electrode current collector made of a metal foil, such as copper or nickel, and includes a first electrode uncoated portion on which the first electrode active material is not coated. The first electrode uncoated portion provides a path for the flow of current between the first electrode plate and the exterior side. Meanwhile, aspects of the present invention are not limited to the materials of the first electrode plate disclosed herein.

In addition, the first electrode uncoated portion may constitute a first current collecting tab 111. The first current collecting tab 111 may include multiple first current collecting tabs configured to protrude from the electrode uncoated portion. The first current collecting tabs 111 are configured to overlap with one another at a predetermined position when the first electrode plate is wound, thereby providing a multi-tab structure. To this end, the first electrode plate may be wound in a state in which the multiple first current collecting tabs 111 are arranged to be spaced a preset distance apart from one another. The first current collecting tabs 111 are configured to be integrated with the first electrode plate and are drawn from the wound first electrode plate, thereby advantageously increasing current collecting efficiency of the electrode assembly 110. However, the first current collecting tab 111 may also be made by providing a separate member different from the first electrode plate according to the choice made by one skilled in the art.

The second electrode plate is formed by coating a second electrode active material, such as a transition metal, on a second electrode current collector made of a metal foil, such as aluminum, and includes a second electrode uncoated portion on which the second electrode active material is not coated.

In addition, a second current collecting tab 112 may be formed from the second electrode uncoated portion so as to correspond to the first current collecting tab 111. The second current collecting tab 112 may also be formed by winding the second electrode plate in a state in which multiple second current collecting tabs are arranged to be spaced apart from one another in the second electrode plate. Therefore, the second current collecting tab 112 may also provide a multi-tab structure, like the first current collecting tab 111.

The separator is positioned between the first electrode plate and the second electrode plate and prevents an electric short between the first electrode plate and the second electrode plate. The separator may include polyethylene, polypropylene, and a composite film of polyethylene and polypropylene. Meanwhile, aspects of the present invention are not limited to the materials of the separator disclosed therein.

In addition, the electrode assembly 110 is accommodated in the case 140 with an electrolyte. Here, one or more electrode assemblies 110 may be accommodated in the case 140. The electrolyte may include a lithium salt, such as LiPF6 or LiBF4, dissolved in an organic solvent, such as ethylene carbonate (EC), propylene carbonate (PC), diethyl carbonate (DEC), ethyl methyl carbonate (EMC), or dimethyl carbonate (DMC). In addition, the electrolyte may be in a liquid, solid or gel phase. In addition, the first current collecting tab 111 and the second current collecting tab 112 are electrically connected to the current collecting plate 170.

The electrode terminals 120 and 130 are electrically connected to the first current collecting tab 111 and the second current collecting tab 112 of the electrode assembly 110, respectively. The electrode terminals 120 and 130 include a first electrode terminal 120 electrically connected to the first current collecting tab 111 and a second electrode terminal 130 electrically connected to the second current collecting tab 112. Here, each of the first current collecting tab 111 and the second current collecting tab 112 are electrically connected to the current collecting plate 170. Therefore, the first and second electrode terminals 120 and 130 are coupled to the current collecting plate 170 to be electrically connected to the first and second current collecting tabs 111 and 112, respectively. In addition, the first and second current collecting tabs 111 and 112 and the current collecting plate 170 may be coupled to each other using ultrasonic welding, resistance welding or laser welding, but aspects of the present invention are not limited to the coupling methods disclosed herein.

The first electrode terminal 120 includes a body part 121 and a terminal part 122 vertically protruding from the body part 121. The terminal part 122 penetrates the cap plate 151 of the cap assembly 150 and has a top portion riveted and fixed to the cap plate 151. The body part 121 is located at a bottom portion of the terminal part 122 and has a greater area than the terminal part 122. In addition, a coupling protrusion 123 is located on a bottom surface of the body part 121 so as to be coupled to the current collecting plate 170. The coupling protrusion 123 is engaged with a throughhole 172 of the current collecting plate 170 to electrically connect the first electrode terminal 120 and the current collecting plate 170.

In addition, the second electrode terminal 130 includes a body part 131, a terminal part 132 and a coupling protrusion 133 so as to correspond to the first electrode terminal 120. Since the second electrode terminal 130 has the same shape as the first electrode terminal 120, a detailed description thereof will not be given.

The case 140 is made of a conductive metal, such as aluminum, an aluminum alloy or nickel plated steel. The case 140 has a substantially hexahedral shape having an opening in which the electrode assembly 110 is inserted and placed. The cap plate 151 is coupled to the opening of the case 140 to seal the case 140. The interior surface of the case 140 is basically subjected to insulation treatment, thereby preventing an electrical short from occurring in the case 140. In some cases, one electrode of the electrode assembly 110 may be electrically connected to the case 140 through the cap plate 151. In this case, the internal insulation treatment of the case 140 may prevent the internal electrical short. Here, the case 140 may operate as, for example, a positive electrode.

The cap assembly 150 is coupled to a top portion (i.e., the opening) of the case 140. In detail, the cap assembly 150 includes a cap plate 151, an electrolyte injection hole 152, a plug 153, a safety vent 154, a gasket 155, a terminal plate 156, a connection member 157, an insulation member 158 and a short-circuit member 159.

The cap plate 151 shaped of a panel may be coupled to the opening of the case 140 and may be made of the same material as the case 140. The cap plate 151 may be coupled to the case 140 by laser welding. In addition, the cap plate 151 may be electrically independent. In some cases, the cap plate 151 may be electrically connected to one of the first current collecting tab 111 and the second current collecting tab 112. For example, the cap plate 151 may be electrically connected to the second current collecting tab 112. In this case, the cap plate 151 and the case 140 may have the same polarity (e.g., a positive polarity). Of course, the cap plate 151 may also be electrically connected to the first current collecting tab 111.

In addition, the electrolyte injection hole 152 for injecting an electrolyte is located at one side of the cap plate 151. The electrolyte is injected into the case 140 through the electrolyte injection hole 152, and the electrolyte injection hole 152 is then sealed by the plug 153.

In addition, the safety vent 154 having a smaller thickness than other regions is located roughly at the center of the cap plate 151. When the internal pressure of the case 140 is higher than a preset rupture pressure, the safety vent 154 is ruptured, thereby preventing the secondary battery 100 from exploding.

In addition, terminal holes 151a are located at opposite sides of the cap plate 151 to allow the first and second electrode terminals 120 and 130 to penetrate, and the gasket 155 is provided at each of the terminal holes 151a. The gasket 155 is made of an insulating material and is coupled to the terminal holes 151a below the cap plate 151 to seal a portion between each of the first and second electrode terminals 120 and 130 and the cap plate 151. The gasket 155 may prevent external moisture from infiltrating into the secondary battery 100 or may prevent the electrolyte accommodated in the secondary battery 100 from flowing out.

The terminal plate 156 is coupled to each of the first and second electrode terminals 120 and 130 upwardly protruding from the cap plate 151 through each of the terminal holes 151a of the cap plate 151. In addition, after the terminal plates 156 are coupled to the first and second electrode terminals 120 and 130, top portions of the first and second electrode terminals 120 and 130 are riveted or welded, thereby allowing the first and second electrode terminals 120 and 130 to be fixed to the terminal plates 156, respectively.

The connection member 157 is positioned between the terminal plate 156 coupled to the second electrode terminal 130 and the cap plate 151 to electrically connect the second electrode terminal 130 and the cap plate 151. The connection member 157 makes close contact with the cap plate 151 and the gasket 155 through the terminal plate 156.

The insulation member 158 is positioned between the terminal plate 156 coupled to the first electrode terminal 120 and the cap plate 151 to insulate the first electrode terminal 120 and the cap plate 151 from each other. The insulation member 158 makes close contact with the cap plate 151 and the gasket 155 through the terminal plate 156.

The short-circuit member 159 is provided at a short-circuit hole 151b located at one side of the cap plate 151. Here, the short-circuit hole 151b is located around the terminal hole 151a having the first electrode terminal 120 coupled thereto. The short-circuit member 159 is positioned between the insulation member 158 and the cap plate 151 in the short-circuit hole 151b. Here, a hole corresponding to the short-circuit hole 151b is provided in the insulation member 158 as well. The short-circuit member 159 is provided as an inversion plate including a downwardly convex round part and an edge part fixed to the cap plate 151. The short-circuit member 159 has the same polarity as the cap plate 151. If the internal pressure of the case 140 exceeds a preset reference pressure, the short-circuit member 159 is inverted (i.e., upwardly convexly protrudes) to make contact with the terminal plate 156 coupled to the first electrode terminal 120, leading to a short-circuit.

The insulation plate 160 is positioned between the cap plate 151 and the electrode assembly 110. The insulation plate 160 protects the electrode assembly 110. In particular, when the cap plate 151 is inwardly distorted, the insulation plate 160 may prevent the electrode assembly 110 from being damaged. In addition, the insulation plate 160 may fix a position of the electrode assembly 110 within the case 140. In addition, although not shown, edges of the insulation plate 160 may be coupled to the case 140 such that they extend over the opening of the case 140. In addition, the insulation plate 160 may be coupled to the case 140 in an interference-fit manner.

A vent hole 161 is provided in the insulation plate 160 so as to be located to correspond to the safety vent 154, and an injection hole 162 is provided at a location corresponding to the electrolyte injection hole 152. Here, the vent hole 161 may include one hole or multiple holes, but aspects of the present invention are not limited to the number of the vent hole 161 to those disclosed herein. Internal gases generated in the case 140 may reach the safety vent 154 of the cap plate 151 through the vent hole 161, and the safety vent 154 may be rupture at the preset rupture pressure to release the internal gases.

The insulation plate 160 may be made of a general insulating material, such as polypropylene or polyethylene, but aspects of the present invention are not limited to the material of the insulation plate 160 to those disclosed herein.

The current collecting plate 170 includes a pair of current collecting plate 170 located above the insulation plate 160. The pair of current collecting plates 170 are connected to the first current collecting tab 111 and the second current collecting tab 112 of the electrode assembly 110, respectively. In detail, the first current collecting tab 111 and the second current collecting tab 112 protrude from side portions of the insulation plate 160 to then be bent to cover opposite sides of the current collecting plate 170. In such a state, the first current collecting tab 111 and the second current collecting tab 112 may be coupled to the current collecting plates 170 by, for example, welding. Each of the current collecting plates 170 may be electrically connected to each of the first current collecting tab 111 and the second current collecting tab 112 to have one single polarity. For example, one of the current collecting plates 170 electrically connected to the first current collecting tab 111 may have a negative polarity, and the other of the current collecting plates 170 electrically connected to the second current collecting tab 112 may have a positive polarity.

The current collecting plate 170 includes a terminal connection part 171 having each of the first and second electrode terminals 120 and 130 coupled thereto, and a tab connection part 175 having each of the first and second current collecting tabs 111 and 112 coupled thereto.

Throughholes 172 to be engaged with coupling protrusions 123 and 133 of the first and second electrode terminals 120 and 130 are provided at first sides of the terminal connection parts 171. That is to say, the coupling protrusions 123 and 133 of the first and second electrode terminals 120 and 130 are engaged with the throughholes 172, respectively, thereby allowing the current collecting plates 170 to be electrically connected to the first electrode terminal 120 and the second electrode terminal 130, respectively. In addition, fuse holes 173 are provided at second sides of the terminal connection parts 171. The fuse hole 173 is located at a portion of the terminal connection part 171 near to the tab connection part 175. The fuse hole 173 may have a rectangular shape, for example, an oblong-shape perpendicular to a lengthwise direction of the terminal connection part 171, but aspects of the present invention are not limited to the shape of the fuse hole 173 to that disclosed herein. The fuse hole 173 may be configured so as to reduce a cross-sectional area of the terminal connection part 171. If a large amount of current flows in the secondary battery 100 due to occurrence of a short circuit, heat may be generated, and regions where the fuse holes 173 are located may be melted and broken, thereby cutting off the flow of current. In addition, a protection member 174 is located in the fuse hole 173. The protection member 174 is configured to cover the fuse hole 173. In detail, the protection member 174 is also provided inside the fuse hole 173 while covering a top surface, a bottom surface and side surfaces of the terminal connection part 171. The protection member 174 may function to prevent an arc from being generated when the regions where the fuse holes 173 are located are melted and broken. In addition, the protection member 174 may also function to reinforce a mechanical strength of the terminal connection part 171 where the fuse hole 173 is located. The protection member 174 may be made of a general insulating material, such as polypropylene or polyethylene, but aspects of the present invention are not limited to the material of the protection member 174 to those disclosed herein.

The tab connection parts 175 extend from the terminal connection parts 171 to a central portion of the cap plate 151. The tab connection parts 175 are positioned higher than the terminal connection parts 171. Therefore, a stepped part is created between each of the terminal connection parts 171 and each of the tab connection parts 175. The short-circuit member 159 is positioned on the tab connection part 175. The first and second current collecting tabs 111 and 112 are electrically coupled to the tab connection parts 175, respectively. In detail, the first and second current collecting tabs 111 and 112 protruding from the side portions of the insulation plate 160 are bent to cover the opposite sides of the tab connection parts 175 to then be coupled to the tab connection parts 175 by welding.

The shock absorbing portion 180 is provided in the current collecting plate 170. In detail, the shock absorbing portion 180 is positioned between the throughhole 172 and the fuse hole 173 in the terminal connection part 171. The shock absorbing portion 180 is a portion of the terminal connection part 171, which is thinner than other portions of the terminal connection part 171. Since the shock absorbing portion 180 is thinner than peripheral regions, it may absorb the shock applied to the current collecting plate 170. For example, if vibration or shock is vertically applied to the secondary battery 100, the electrode assembly 110 may vibrate within the case 140 and the vibration of the electrode assembly 110 may be transmitted to the cap plate 151 through the first and second current collecting tabs 111 and 112 and the current collecting plate 170. However, since the shock absorbing portion 180 thinner than the peripheral regions is located in the current collecting plate 170, the shock absorbing portion 180 may absorb the vibration or shock applied to the secondary battery 100. Therefore, the shock absorbing portion 180 may minimize the stress exerted on the current collecting plate 170. Additionally, the shock absorbing portion 180 may prevent a crack from occurring to the fuse hole 173.

A thickness T1 of the shock absorbing portion 180 is approximately 20% of a thickness T2 of the terminal connection part 171. If the shock absorbing portion 180 has the thickness T1 smaller than 20% of the thickness T2 of the terminal connection part 171, the thickness T1 of the shock absorbing portion 180 is unduly small so as to be easily ruptured or deformed even at a slight vibration or shock. In addition, if the shock absorbing portion 180 has the thickness T1 greater than 20% of the thickness T2 of the terminal connection part 171, the shock absorbing portion 180 may have relatively low shock absorbing capability, making it difficult to properly perform a shock absorbing function.

As described above, in the secondary battery 100 according to an embodiment of the present invention, the shock absorbing portion 180 thinner than peripheral regions is located in the current collecting plate 170 to absorb the vibration or shock applied to the current collecting plate 170, thereby improving safety. In addition, since the shock absorbing portion 180 absorbs the vibration or shock applied to the current collecting plate 170, cracks can be prevented from being created at the fuse hole 173 located in the current collecting plate 170, thereby improving reliability of the secondary battery 100.

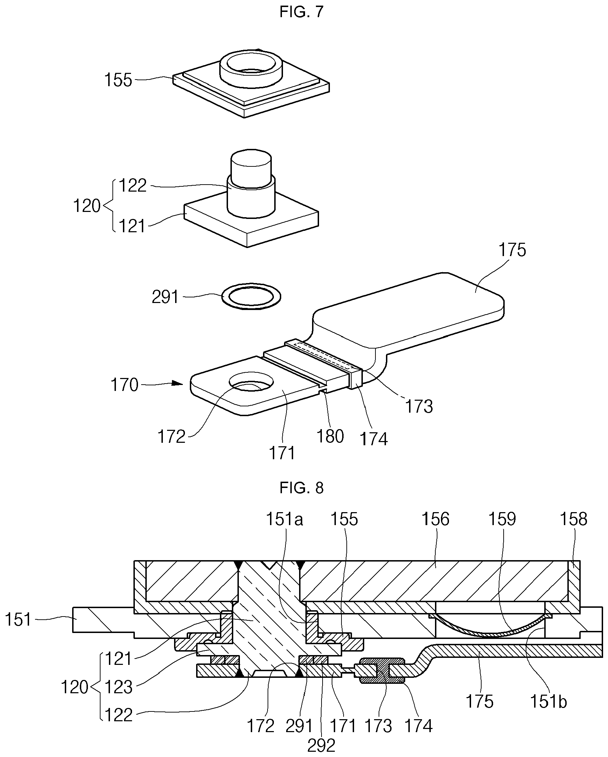

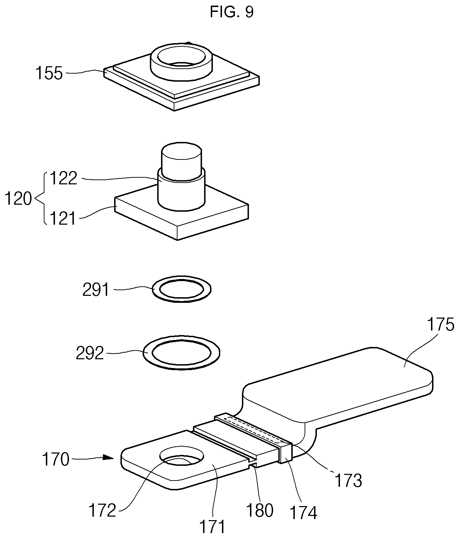

FIG. 6 is an enlarged cross-sectional view illustrating a coupling relationship of a current collecting plate in a secondary battery according to another embodiment of the present invention and FIG. 7 is an exploded perspective view of the current collecting plate shown in FIG. 6. FIG. 8 is an enlarged cross-sectional view illustrating a coupling relationship of a current collecting plate in a secondary battery according to still another embodiment of the present invention and FIG. 9 is an exploded perspective view of the current collecting plate shown in FIG. 8.

Referring to FIGS. 6 and 7, the secondary battery according to another embodiment of the present invention further includes a shock absorbing member 291, compared to the secondary battery 100 shown in FIGS. 1 to 5.

The shock absorbing member 291 is positioned between a first electrode terminal 120 and a current collecting plate 170. Of course, the shock absorbing member 291 may also be positioned between a second electrode terminal 130 and the current collecting plate 170.

In detail, the shock absorbing member 291 is fitted into a coupling protrusion 123 of the first electrode terminal 120 and is positioned between a bottom surface of a body part 121 and a top surface of the current collecting plate 170. The shock absorbing member 291 is shaped of a ring so as to be fit into the coupling protrusion 123 and is made of an elastic material. Therefore, the shock absorbing member 291 is capable of absorbing the vibration or shock applied from the current collecting plate 170 to the first electrode terminal 120. For example, the shock absorbing member 291 may be formed by coating a metal film on a surface of an insulating material having elasticity. In addition, the shock absorbing member 291 may include only an insulating material without a metal film. This is because first electrode terminal 120 is electrically connected to the current collecting plate 170 through the coupling protrusion 123 even when the shock absorbing member 291 is made of an insulating material.

In addition, as shown in FIGS. 8 and 9, the shock absorbing member may include two shock absorbing members. That is to say, the shock absorbing member may include a first shock absorbing member 291 coupled to a coupling protrusion 123 of the first electrode terminal 120, and a second shock absorbing member 292 coupled to an exterior side of the first shock absorbing member 291. Here, the first shock absorbing member 291 may be the same as the shock absorbing member 291 shown in FIGS. 6 and 7. In addition, the second shock absorbing member 292 may be made of the same material and may have the same configuration as the first shock absorbing member 291. However, the second shock absorbing member 292 may have a greater diameter than the first shock absorbing member 291.

Although the foregoing embodiments have been described to practice the secondary battery of the present invention, these embodiments are set forth for illustrative purposes and do not serve to limit the invention. Those skilled in the art will readily appreciate that many modifications and variations can be made, without departing from the spirit and scope of the invention as defined in the appended claims, and such modifications and variations are encompassed within the scope and spirit of the present invention.

## Claims

1. A secondary battery comprising:
an electrode assembly having a current collecting tab formed therein;
a case for housing the electrode assembly;
a cap plate coupled to an opening of the case;
an electrode terminal formed through the cap plate; and
a current collecting plate, disposed between the electrode assembly and the cap plate, for electrically connecting the current collecting tab and the electrode terminal,
wherein the current collecting plate has a shock absorbing portion for absorbing vibration or shock formed thereon.

2. The secondary battery of claim 1, wherein the shock absorbing portion is thinner than peripheral regions.

3. The secondary battery of claim 2, wherein the shock absorbing portion has a thickness of 20% of a thickness of the current collecting plate.

4. The secondary battery of claim 1, wherein the current collecting plate comprises:
a terminal connection part to which the electrode terminal is coupled; and
a tab connection part to which the current collecting tab is coupled.

5. The secondary battery of claim 4, wherein a throughhole engaged with the electrode terminal is located at one side of the terminal connection part, and a fuse hole is located at the other side of the terminal connection part.

6. The secondary battery of claim 5, wherein the shock absorbing portion is positioned between the throughhole and the fuse hole.

7. The secondary battery of claim 1, further comprising a shock absorbing member located between the electrode terminal and the current collecting plate.

8. The secondary battery of claim 7, wherein the electrode terminal comprises:
a body part;
a terminal part upwardly protruding from the body part and penetrating the cap plate; and
a coupling protrusion downwardly protruding from the body part,
wherein the shock absorbing member is coupled to the coupling protrusion.

9. The secondary battery of claim 8, wherein the shock absorbing member comprises:
a first shock absorbing member coupled to the coupling protrusion; and
a second shock absorbing member coupled to the exterior of the first shock absorbing member.

10. The secondary battery of claim 7, wherein the shock absorbing member is formed by coating a metal film on a surface of an insulating material having elasticity.
